# EUROPEAN PATENT APPLICATION

(11) **EP 4 261 259 A1**
(43) Date of publication of application: **18.10.2023**
(21) Application number: 23275047.1
(22) Date of filing: 29.03.2023
(51) Int. Cl.: C09J 7/20, B65H 75/02

(54) **ADHESIVE TAPE SUPPORT SUBSTRATE AND METHOD OF USE AND/OR MANUFACTURE THEREOF**

(30) Priority: 13.04.2022 GB 202205460; 28.09.2022 GB 202214178
(71) Applicant: Bhojwani, Rajan, Retford Nottinghamshire DN22 8QX (GB)
(72) Inventor: Bhojwani, Rajan, Retford Nottinghamshire DN22 8QX (GB)
(74) Representative: Tomkinson, Alexandra

(57) **Abstract**

An adhesive tape support substrate for supporting adhesive tape in use. The support substrate has an outer surface, an outwardly facing surface and/or an outermost surface of the support substrate that is or visually appears black or near black in colour, or is or appears visually as another colour other than black or near black and has a light reflection value (LRV) of approximately 65% or less and/or a light absorption value (LAV) of approximately 35% or more.

## Description

The present invention relates to an adhesive tape support substrate and/or to a method of use and/or manufacture thereof. It also relates to adhesive tape including an adhesive tape support substrate and/or to a method of use and/or manufacture thereof.

Visualising the free end of transparent adhesive tape is a common problem faced by many users. As such, it is often difficult for users to identify where the free end of the tape starts on a roll of tape and to then subsequently use the tape.

Transparent adhesive tape has conventionally been supported on a reflective support substrate, most commonly white cardboard, coloured paper with contrasting logos or a plastic roll or cylinder. This tends to result in significant reflection, internal reflection, and light scatter due, at least in part, to the curved surface of the white/ reflective roll or cylinder and the transparent nature of the curved adhesive tape located around the roll or cylinder.

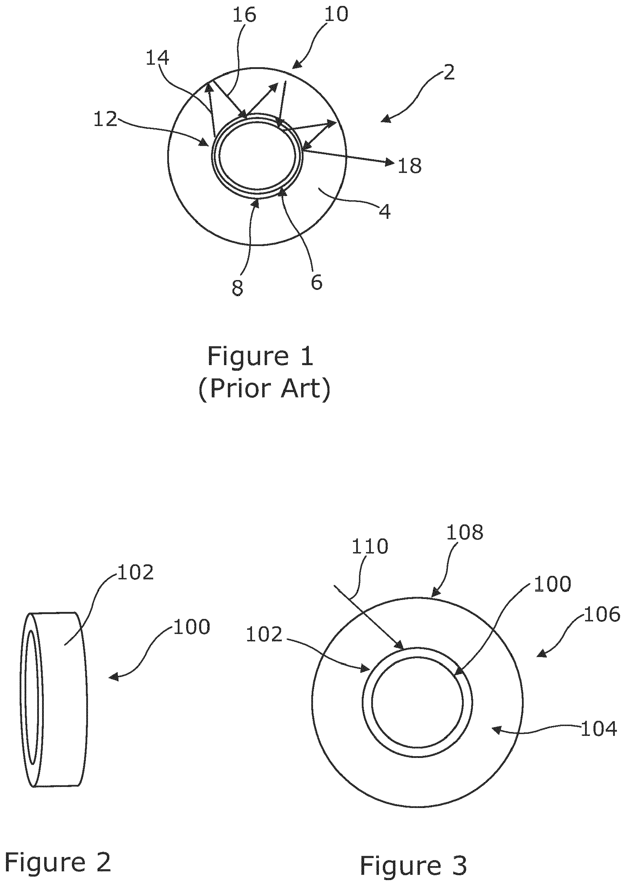

Also, due to the interface of the transparent tape and air, internal reflection occurs due to the properties of light. For example, in the case of adhesive tape and air, the density and hence the refractive index are different, resulting in light reflection back into the adhesive tape roll. Due to the curved nature of the support substrate and adhesive tape, and also due to light scatter, the angle of the light incident on the tape/air boundary will often exceed the critical angle and the light will be totally internally reflected. The combination of these effects results in reflected light interfering with the user's vision and therefore ability to see the finely contrasted edge of the tape. This is more clearly illustrated with reference to figure 1, which shows a roll of adhesive transparent tape 2. The adhesive tape 4 is wound around a cardboard cylindrical support substrate 6, which typically has an outer coating 8 provided on the same, multiple times. The outermost free edge 10 of the adhesive tape 2 is located on top of the outermost full wound layer of tape.

The most common outer coating used for the support substrate is white in colour, which is a colour reflecting the most light. However, other coloured outer coatings are used conventionally, such as blue, green, yellow and red, often with contrasting coloured logos, which also reflect their respective wavelengths. This affects user visualisation of the adhesive tape edge, which has a low level of contrast already.

In particular, incoming light, shown by arrow 12, enters the transparent tape roll and is reflected off the surface of the white/ reflective cylindrical support substrate, as shown by arrow 14. Some of this reflected light is then reflected back towards the substrate 6, as shown by arrow 16, and the process repeats itself via internal reflection, thereby causing further reflection from the support substrate and affecting visual contrast sensitivity. Some of the light is also reflected back out of the tape to the eyes of the user interfering with visual acuity as, shown by arrow 18. The combination of these affects reduces visualisation of the tape edge.

Thus, the light reflection taking place within a conventional roll of adhesive tape significantly reduces a user's vision of the outermost free edge of the adhesive tape, thereby resulting in a user spending significant time trying to locate the outermost free edge of the tape before they can use the same. This is incredibly frustrating for many users and, in people with vision impairment, may result in them simply not being able to use the adhesive tape without third party assistance.

It is therefore an aim of the present invention to provide an adhesive tape support substrate that overcomes the abovementioned problems.

It is a further aim of the present invention to provide a method of using and/or manufacturing an adhesive tape support substrate that overcomes the abovementioned problems.

It is a yet further aim of the present invention to provide adhesive tape or a roll of adhesive tape including an adhesive tape support substrate.

It is a yet further aim of the present invention to provide a method of using and/or manufacturing an adhesive tape or a roll of adhesive tape including an adhesive tape support substrate.

According to one aspect of the present invention, there is provided an adhesive tape support substrate for supporting adhesive tape in use, characterised in that an outer surface, an outwardly facing surface and/or an outermost surface of the support substrate is or visually appears black or near black in colour, or is or appears visually as another colour other than black or near black and has a light reflection value (LRV) of approximately 65% or less and/or has a light absorption value (LAV) of approximately 35% or more .

Thus, by providing the adhesive tape support substrate with a colour and/or material that minimises the reflection of light and maximises light absorption, this improves the contrast of a free outermost edge of the adhesive tape when wound or located on the adhesive tape support substrate in use. It minimises light scatter within the adhesive tape when adhesive tape is applied to or around the support substrate. This allows easier visualisation of the free edge of adhesive tape when wound onto or around the adhesive tape support substrate in use, thereby improving a user's experience of the adhesive tape product in use. For example, a user is able to more easily locate the free edge of the tape in less time and without the frustration often associated with conventional rolls of adhesive tape.

The present invention provides a simple and cost effective solution to a well-known problem. At least part of the inventiveness of the present invention is the appreciation of the problem of conventional rolls of adhesive tape and understanding the reasons behind the problem.

The nature of the electromagnetic spectrum gives rise to light rays being reflected or absorbed depending on the colour of a surface as well as the angle of inclination of the surface. The Applicant has used this scientific concept to provide a non-obvious and surprising solution to the problem of finding the outermost free edge of adhesive tape.

In one embodiment the outer surface, the outwardly facing surface and/or the outermost surface of the support substrate that is or visually appears black or near black in colour also has a LRV of approximately 65% or less and/or has a LAV of approximately 35% or more.

In one embodiment the entire or substantially the entire outer surface, the outwardly facing surface and/or the outermost surface of the support substrate is or appears black or near black in colour, or is or appears visually as another colour other than black or near black and has a LRV of approximately 65% or less and/or a LAV of approximately 35% or more.

In one embodiment approximately 30% or more of the surface area of the outer surface, the outwardly facing surface and/or the outermost surface of the support substrate is or visually appears black or near black in colour, or is or appears visually as another colour other than black or near black and has a LRV of approximately 65% or less and/or has a LAV of approximately 35% or more; preferably on approximately 35% or more of the surface area; further preferably approximately 40% or more of the surface area; yet further preferably approximately 45% or more of the surface area, yet further preferably approximately 50% or more of the surface area, yet further preferably approximately 55% or more of the surface area, yet further preferably approximately 60% of the surface area; yet further preferably approximately 65% or more of the surface area; yet further preferably approximately 70% or more of the surface area; yet further preferably approximately 75% or more of the surface area; yet further preferably approximately 80% or more of the surface area; yet further preferably approximately 85% or more of the surface area; yet further preferably approximately 90% or more of the surface area; yet further preferably approximately 95% or more of the surface area; or yet further preferably approximately 100% of the surface area.

In one embodiment the LRV and/or LAV mentioned herein is taken at all or substantially all, or every or substantially every specific wavelength, within the visible spectrum (i.e. 400nm-700nm) with respect to the outer surface, the outwardly facing surface and/or an outermost surface of the support substrate. Thus, for example, a LRV of approximately 65% or less means that at every wavelength within the visible spectrum, the LRV is 65% or less.

In one embodiment the LRV and LAV mentioned herein is an average value taken across the entire, or substantially the entire visible part of the electromagnetic spectrum (i.e. 400-700nm) with respect to the outer surface, the outwardly facing surface and/or an outermost surface of the support substrate, and in this embodiment the average LRV is approximately 25% or less and/or the average LAV is approximately 75% or more.

Preferably the average LRV is 20% or less, further preferably is 15% or less, yet further preferably is 10% or less, further preferably is 5% or less, across the entire, or substantially the entire visible part of the electromagnetic spectrum (400nm-700nm).

Preferably the average LAV is 80% or more, further preferably is 85% or more, yet further preferably is 90% or more, further preferably is 95% or more across the entire, or substantially the entire visible part of the electromagnetic spectrum (400nm-700nm).

Preferably the LRV and/or the LAV taken at wavelengths within the visible spectrum (400nm-700nm) is measured by optical spectrum analysing means, device and/or spectrometer. For example, an optical spectrum analyser and spectrometer could be used, such as for example, a Thorlabs, UK optical spectrum analyser and spectrometer.

Preferably the % LRV and/or % LAV relates to the light within the visible spectrum hitting the outer surface, the outwardly facing surface and/or an outermost surface of the support substrate.

In one embodiment the outer surface, the outwardly facing surface and/or an outermost surface of the support substrate has a LRV of approximately 60% or less, preferably a LRV of approximately 55% or less, preferably a LRV of approximately 50% or less, further preferably a LRV or approximately 45% or less, yet further preferably a LRV of approximately 40% or less, yet further preferably a LRV or approximately 35% or less; yet further preferably a LRV or approximately 30% or less; yet further preferably a LRV of approximately 25% or less; yet further preferably a LRV of approximately 20% or less; yet further preferably a LRV of approximately 15% or less; yet further preferably a LRV of approximately 10% or less; or yet further preferably a LRV of approximately 5% or less.

In one embodiment the outer surface, the outwardly facing surface and/or an outermost surface of the support substrate has a LAV of approximately 40% or more, preferably has a LAV of approximately 45% or more, further preferably has a LAV of approximately 50% or more, yet further preferably has a LAV of approximately 55% or more, yet further preferably has a LAV of approximately 60% or more, yet further preferably has a LAV of approximately 65% or more, yet further preferably has a LAV of approximately 70% or more, yet further preferably has a LAV of approximately 75% or more, yet further preferably has a LAV of approximately 80% or more, yet further preferably has a LAV of 85% or more, yet further preferably has a LAV of 90 or more, or yet further preferably has a LAV of approximately 95% or more of light.

Preferably any or the % surface areas mentioned herein can be combined with any of the % LRV or % LAV herein.

Preferably the % LRV and % LAV are directly opposite or inverse values of each other, such that for example, a surface having a LRV of 40% has a LAV of 60%; a surface having a LRV of 30% has a LAV of 70% and/or the like.

Preferably reference to a % value herein is the % value +/-5%.

In one embodiment the outer surface, the outwardly facing surface and/or the outermost surface of the support substrate has a matte surface (i.e. has a relatively low specular reflection and a relatively low gloss unit value). This helps to reduce the effect of light reflection to a negligible level and maximises the scientific effect of increased adhesive tape edge contrast sensitivity in use.

In one embodiment the outer surface, the outwardly facing surface and/or the outermost surface of the support substrate has a gloss surface (i.e. has a relatively low diffuse reflection and a relatively high gloss unit value).

Preferably the gloss surface has a gloss unit value equal to or between 0 and 100%. This aims to balance the effect of both specular and diffuse light reflection independently of the colour, which is significantly affected by the varying properties of the overlying adhesive base layer, to a negligible level, for production and to maximise the scientific effect of increased adhesive tap edge contrast sensitivity in use.

In one embodiment the outer surface, the outwardly facing surface and/or the outermost surface of the support substrate is a smooth, relatively smooth or substantially smooth surface.

In one embodiment the outer surface, the outwardly facing surface and/or the outermost surface of the support substrate is a rough, relatively rough or substantially rough surface.

In one embodiment, by providing the adhesive tape support substrate with a black or near black appearance on equal to or more than 30% of the surface area of the outer surface, outwardly facing surface and/or outermost surface of the support substrate, that is defined by a LRV of approximately 65% or less at every or substantially every specific wavelength within the visible part of the electromagnetic spectrum (400nm-700nm) and a LAV of 35% or more at every or substantially every specific wavelength within the visible part of the electromagnetic spectrum (400nm-700nm), this improves the contrast of a free outermost edge of the adhesive tape when wound or located on the adhesive tape support substrate in use. It minimises light scatter within the adhesive tape when adhesive tape is applied to or around the support substrate. This allows easier visualisation of the free edge of adhesive tape when wound onto or around the adhesive tape support substrate in use, thereby improving a user's experience of the adhesive tape product in use. For example, a user is able to more easily locate the free edge of the tape in less time and without the frustration often associated with conventional rolls of adhesive tape.

Preferably adhesive tape is wound onto or around the adhesive tape support substrate in use.

Further preferably the adhesive tape is wound onto or around the adhesive tape support substrate multiple times to provide a multiple layered adhesive tape product.

In one embodiment the adhesive tape support substrate is cylindrical or substantially cylindrical in shape. However, it will be appreciated that the adhesive tape support substrate could be any suitable shape, such as square, rectangular, oval, hexagonal, pentagonal, any single or multi-sided shape and/or the like.

Preferably a first free end of the adhesive tape is adhered to or attached to the outermost surface of the adhesive tape support substrate. The remainder of the adhesive tape is then typically wound around the adhesive tape support substrate from this adhered or attached part (i.e. it is wound around and over the attached first end of the adhesive tape).

Preferably a second free end of the adhesive tape is provided at, adjacent to and/or associated with the outermost layer of the adhesive tape that is wound around the adhesive tape support substrate.

Preferably it is the second free end of the adhesive tape for which visualisation of the same is significantly improved by the present invention.

In one embodiment the adhesive tape is transparent or substantially transparent. However, the adhesive tape could be at least partially opaque and the invention would still provide the advantageous effect.

Preferably the adhesive tape is a single sided adhesive tape (i.e. with adhesive provided on only one side of the tape) or the adhesive tape is a double sided adhesive tape (i.e. with adhesive provided on opposing sides of the tape).

Preferably the adhesive tape is an elongate continuous length of material with adhesive provided on at least one surface thereof.

Preferably the elongate material is flexible or substantially flexible in form.

In one embodiment the adhesive tape support substrate is formed from, consists of or includes any or any combination of plastic, cardboard, rubber, wood, any substrate material such as plant based or biodegradable products and/or the like.

In one embodiment the entire, or substantially the entire adhesive tape support substrate (i.e. the front or outwardly facing surface, and the rear or inwardly facing surfaces of the support substrate) is or appears black or near black in colour, or is or appears visually as another colour other than black or near black and has a LRV of approximately 65% or less and/or LAV of approximately 35% or more of light. Thus, in one example, this typically equates to the entire, or substantially the entire adhesive tape support substrate being black or near black and/or being another colour other than black that minimises the reflection of light and maximises light absorption at these values.

In one embodiment at least the outermost layer or surface or the outwardly facing surface of the adhesive tape support substrate is black or near black is or appears black or near black in colour, or is or appears visually as another colour other than black or near black and has a LRV of approximately 65% or less and/or a LAV of approximately 35% or more.

In one embodiment an intermediate layer or surface and/or an outwardly facing surface of the adhesive tape support substrate (which is not necessarily the outermost surface of the adhesive tape support substrate) is or appears black or near black in colour, or is or appears visually as another colour other than black or near black and has a LRV of approximately 65% or less and/or a LAV of approximately 35% or more. Thus, for example, an outwardly facing intermediate surface of the adhesive tape support substrate could be black in colour and a further transparent outer surface is provided over the intermediate surface. As such, the outermost outwardly facing substrate surface would appear black in colour.

In one embodiment a surface or layer, an outermost surface or layer and/or an outwardly facing surface or layer of the adhesive tape support substrate is provided with, consists of and/or includes a heat resistant or heat protective layer, coating or surface. This helps to prevent any detrimental effects of heat absorption on the adhesive properties of the adhesive tape in use due to the light absorbing properties of the surface.

In one embodiment a surface or layer, an outermost surface or layer and/or an outwardly facing surface or layer of the adhesive tape support substrate is provided with, consists of and/or includes a matt or non-reflective surface, or gloss surface (i.e. high specular reflection and low diffuse reflection) and/or is or appears black or near black in colour, or is or appears visually as another colour other than black or near black and has a LRV of approximately 65% or less and/or a LAV of approximately 35% or more of light.

In one embodiment greater than or equal to 30% of the surface area of a surface or layer, an outermost surface or layer and/or an outwardly facing surface or layer of the adhesive tape support substrate is provided with, consists of and/or includes a matt or non-reflective surface, or gloss surface (i.e. high specular reflection and low diffuse reflection) and/or is or appears black or near black in colour, or is or appears visually as another colour other than black or near black and has a LRV of approximately 65% or less and/or a LAV of approximately 35% or more of light.

In one embodiment only a part of the adhesive tape support substrate surface is or appears black or near black in colour, or is or appears visually as another colour other than black or near black and has a LRV of approximately 65% or less and/or a LAV of approximately 35% or more. For example, one or more logos or patterns could be provided on the substrate surface or layer that is a different colour or having different light absorption or reflective properties compared to the remainder or the surface or layer. For example up to or less than 10 % or 7% of the surface of the layer could be provided with logos or patterns, but up to or less than 20% has been shown not to significantly reduce the effect of edge visualisation.

Preferably the outermost free end of the tape is clear or substantially clear in normal use.

According to a further aspect of the present invention, there is provided an adhesive tape support substrate for supporting adhesive tape in use, characterised in that an outer surface, an outwardly facing surface and/or an outermost surface of the support substrate is or appears black or near black in colour and/or is or appears to be another colour other than black that minimises the reflection of light and maximises light absorption and/or is a material that minimises light reflection and maximises light absorption.

According to a yet further aspect of the present invention there is provided a method of manufacturing and/or using an adhesive tape support substrate for supporting adhesive tape in use, characterised in that the method includes the steps of providing an outer surface, an outwardly facing surface and/or an outermost surface of the support substrate that is or visually appears black or near black in colour, or is or appears visually as another colour other than black or near black and has a LRV of approximately 65% or less and/or a LAV of approximately 35% or more. Preferably the method includes the step of winding adhesive tape around the outer surface, an outwardly facing surface and/or an outermost surface of the support substrate.

According to a further aspect of the present invention there is provided adhesive tape, said adhesive tape including an adhesive tape support substrate for supporting the adhesive tape according to any or any combination of features described herein.

According to a yet further aspect of the present invention there is provided a method of using and/or manufacturing adhesive tape, said adhesive tape including winding the adhesive tape onto an adhesive tape support substrate according to any or any combination of features described herein.

Embodiments of the present invention will now be described with reference to the following figures, wherein:
Figure 1 (PRIOR ART) is a simplified view of a roll of adhesive tape provided on a conventional adhesive tape support substrate;
Figure 2 is a perspective view of an adhesive tape support substrate according to an embodiment of the present invention;
Figure 3 is a side view of a roll of adhesive tape provided on an adhesive tape support substrate according to an embodiment of the present invention;

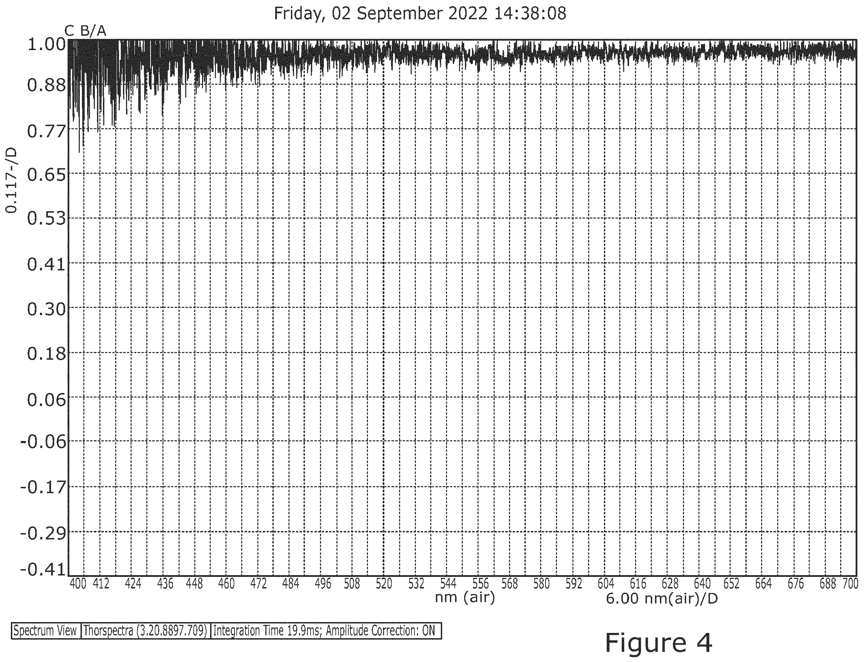

Figure 4 is a reflection spectrum for the test colour white showing greater than 99% reflection using a birfurcated fibre probe optical spectral analyser and spectrometer. The Y-axis indicates the percentage (expressed as a fraction of 1) of light reflected, giving a LRV in %.The wavelength of light within the visible spectrum at which the light reflection measurement was taken is shown on the X -axis in nm (air);

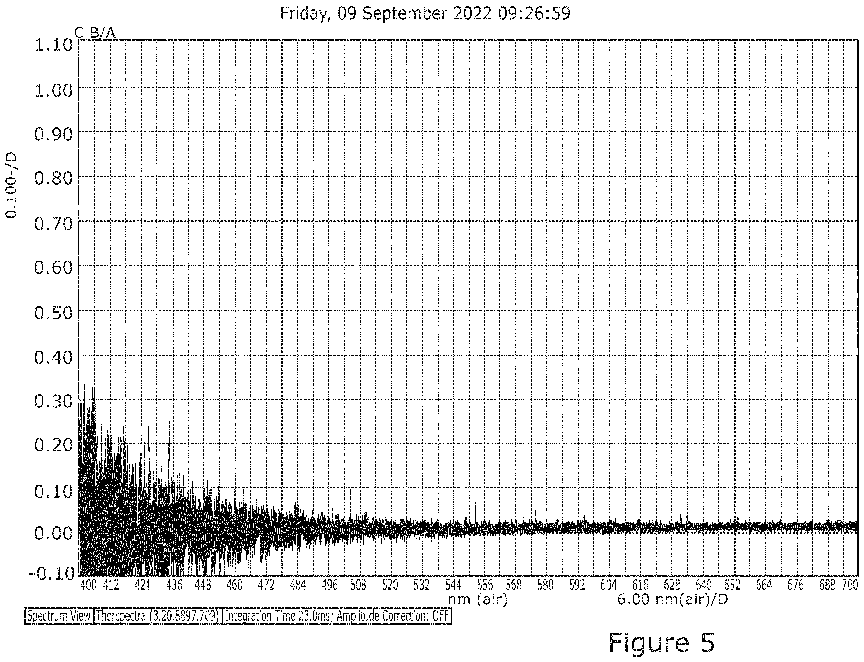

Figure 5 is a reflection spectrum for the test colour black showing 1% reflection using a bifurcating fibre probe optical spectral analyser and spectrometer. The Y-axis indicates the percentage (expressed as a fraction of 1) of light reflected, giving a LRV in %. The wavelength of light within the visible spectrum at which the light reflection measurement was taken is shown on the X -axis in nm (air);

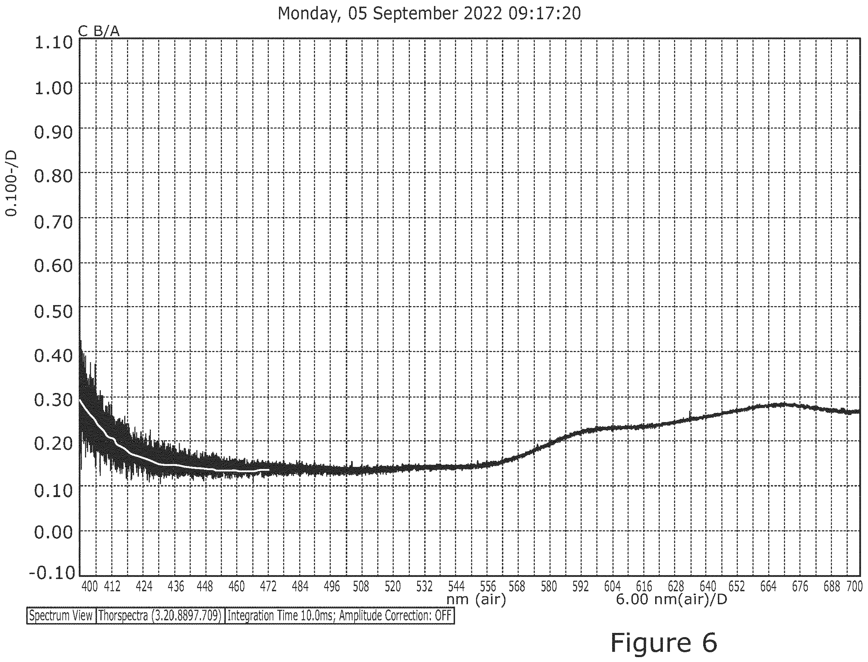

Figure 6 is a reflection spectrum for a dark brown test colour using a bifurcating fibre probe optical spectral analyser and spectrometer with a mean light reflection value taken through the shorter wavelength measurements. The Y-axis indicates the percentage (expressed as a fraction of 1) of light reflected, giving a LRV in %. The wavelength of light within the visible spectrum at which the light reflection measurement was taken is shown on the X -axis in nm (air);

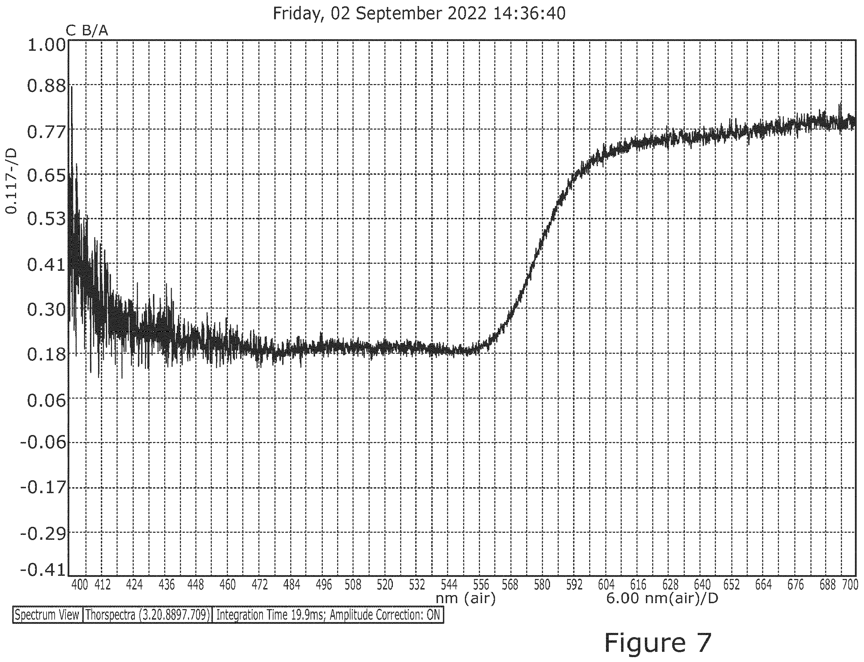

Figure 7 is a reflection spectrum for a bright red colour using a bifurcating fibre probe optical spectral analyser and spectrometer. The Y-axis indicates the percentage (expressed as a fraction of 1) of light reflected, giving a LRV in %. The wavelength of light within the visible spectrum at which the light reflection measurement was taken is shown on the X -axis in nm (air);

Referring to figures 2 and 3, there is illustrated an adhesive tape support substrate 100 which, in this example, is cylindrical or substantially cylindrical in shape. The substrate 100 can be formed from any suitable material such as any or any combination of rubber, plastic, cardboard and/or the like. The outermost or outwardly facing coating or surface 102 of the substrate 100 appears black in colour to a user observing the substrate in use.

The Applicant has realised that the amount of reflection from the surface of the support substrate depends on the absorption of the light (which depends on colour and results in the apparent colour of the material), the amount of specular reflection (related to the glossiness of the surface) and the diffuse reflection (related to the scattering properties of the material). For example, a glossy white material has low light absorption over the visible part of the electromagnetic spectrum, high specular reflection, but relatively low diffuse reflection. Light is directly reflected and scattered from the curved internal substrate of the support substrate. As such, in one example, by providing at least or equal to 90% of the surface area of the outermost or outwardly facing coating or surface 102 of the substrate 100 as black in colour, the substrate reflects light to less than 20% at every specific wavelength within the visible electromagnetic spectrum (i.e. has a LRV of less than 20%), and increases the light absorption (LAV) to 80% or greater at every or substantially every specific wavelength within the visible part of the electromagnetic spectrum. Transparent adhesive tape 104 is wound around the substrate 100 to provide a multi layered roll of adhesive tape 106. An outermost free edge 108 of the adhesive tape is clearly visible by a user viewing the roll of tape 106 in use. This is because incoming light, shown by arrow 110, is substantially absorbed by the black substrate 100 rather than reflected into the tape 104 as it is in the prior art.

Experimental evidence has shown that at these low levels of reflection of incoming light the effect is more significant for a substrate with high specular reflection (i.e. gloss), in which case the specular reflection is reduced due to the relatively rough, matter adhesive base layer of the overlying tape. For a substrate with low specular reflection levels (i.e. matter black plastic) the comparatively high level of diffuse reflection is accentuated by the overlying tape. Also, due to the directional nature of the user's position relative to the tape edge, specular reflection can be more significantly reduced by the position of the tape.

Therefore, in one embodiment, the aim is to have the entire or substantially the entire surface area of the substrate or outer surface of the substrate (such as for example, considered to be equal to or more than 90% of the surface area) with the lowest diffuse and specular reflection properties in a black or near black colour with the reflection value (LRV) of less than 20% at every or substantially every specific wavelength within the visible electromagnetic spectrum, and/or an absorption (LAV) of 80% or greater at every or substantially every specific wavelength of the visible part of the electromagnetic spectrum. This improves the contrast between the free edge 108 of the tape 104 and the underlying tape provided below the free edge 108, thereby improving visualisation of the free edge 108 to a user. This allows a user to more easily locate the free edge of the tape 104 and speeds up the time in which it takes to use the tape relative to the prior art. It also allows users with vision impairment to use adhesive tape when they may have previously been prevented using adhesive tape with conventional tape rolls. However, advantages of the present invention can still be observed when the LRV is 65% or less, the LAV is 35% or more, and/or over 30% or more of the surface area of the outwardly facing surface of the tape support substrate.

### Example Experiment 1

The Applicants have measured the reflection and absorption properties of a number of substrate materials, substrate material colours and/or substrate material glossiness of existing adhesive tape support substrates and samples of the adhesive tape support substrates used for the present invention. These measurements have been used to define the parameter boundaries used herein.

The measurements were taken using an optical spectrum analyser and spectrometer. The measurement methodology used for measuring surface reflection properties is set out below.

In Example Experiment 1, an optical spectrum analyser in the form of a birfurcated fibre probe (Thorlabs RP24, UK) was used for taking reflection measurements. This fibre probe is a two-into-one fibre. Fibres 1 (input) and 2 (output) join together to produce fibre 3 (probe). A black-body light source (Thorlabs SL201L/M - with a colour temperature of 2796 K) was coupled into fibre 1. The probe end of the fibre (fibre 3) was held in a Thorlabs RPH holder to provide a consistent geometry with the substrate surface under test. Light from the source is then incident on the substrate surface. The light returning from the substrate surface re-enters the probe and is then coupled into a spectrometer (Thorlabs CCS100/M) via fibre 2. The spectrometer is controlled using ThorSpectra software on a PC.

The following steps were undertaken to measure the reflection spectrum of a substrate sample surface:
1. A reflection spectrum from a white reference surface (Spectralon) was taken so that the spectrum of the lamp and the response of the spectrometer could be accounted for. The white reference surface was a Lambertian reflector with a "flat" response (>99% reflection) across the visible part of the spectrum (400 - 700 nm). See Figure 4 that shows the reflection spectrum for the white reference surface.
2. A reflection spectrum from the test substrate surface was taken (maintaining the same geometry as in step 1).
3. The ratio of the spectrums in steps 2 and 1 was taken to obtain a corrected or calibrated reflection spectrum for the test substrate surface.
4. As a final check the test substrate surface was replaced with the white reference surface and step 3 was repeated to ensure the reflection coefficient recorded was 1 (100%) over the whole wavelength range.
5. To reduce noise in the spectra, averaging over 100 spectra were used in steps 1 and 2.
6. Whenever spectra was recorded, the probe and RPH holder were covered with a suitable cover to exclude any stray light.

It is known that the light source used to measure the reflection spectrum is very weak at short wavelengths and so the detected signal is very noisy. As a result, the correction for the source spectrum is a very noisy and unreliable reflection measurement in this range and therefore a mean value was extrapolated from the signal distribution (see fig 6 for a dark brown test substrate surface where a black mean line is shown through the reflection spectrum measurements to show the average (mean) reflection values (LRV) at different wavelengths of light). Although it may seem counterintuitive that red colours, for example, may have a reflection signal in the short wavelength spectrum (see Fig 7 for a bright red test substrate where the black arrow shows the reflection signal measured at shorter wavelengths), it is known that the way that these colour pigments are made often causes short wavelength reflections which the human eye is not very sensitive to; these measurements are repeatable and consistent and have been taken into consideration to inform the surface property parameters of the invention. It is also known that measurements from a curved surface with variable textile properties can cause variable results, and therefore during any measurements the surface has been laid flat and tested repeatedly in order to obtain an accurate reading.

Measurements of all known existing prior art substrates that were measured were shown to have a LRV of more than 70% over more than 70% of their substrate surfaces.

An example of a continuous black coloured substrate of a type that can be used with the present invention provided a LAV of approximately 99% and a LRV of approximately 1%.

A further example of a black coloured substrate of a type that can be used with the present invention provided a LRV of approximately 20% or less, and a LAV of approximately 80% or more at every or substantially every specific wavelength within the visible spectrum.

## Claims

1. An adhesive tape support substrate for supporting adhesive tape in use, **characterised in that** an outer surface, an outwardly facing surface and/or an outermost surface of the support substrate is or visually appears black or near black in colour, or is or appears visually as another colour other than black or near black and has a light reflection value (LRV) of approximately 65% or less and/or a light absorption value (LAV) of approximately 35% or more of light.

2. The adhesive tape support substrate according to claim 1, wherein the entire or substantially the entire outer surface, the outwardly facing surface and/or the outermost surface of the support substrate is or visually appears black or near black in colour, or is or appears visually as another colour other than black or near black and has a LRV of approximately 65% or less and/or a LAV of approximately 35% or more of light; or wherein approximately 30% or more of the surface area of the outer surface, the outwardly facing surface and/or the outermost surface of the support substrate is or visually appears black or near black in colour, or is or appears visually as another colour other than black or near black and has a LRV of approximately 65% or less and/or a LAV of approximately 35% or more of light.

3. The adhesive tape support substrate according to claim 2, wherein approximately 35% or more of the surface area; approximately 40% or more of the surface area; approximately 45% or more of the surface area; approximately 50% or more of the surface area; approximately 55% or more of the surface area; approximately 60% or more of the surface area; approximately 65% or more of the surface area; approximately 70% or more of the surface area; approximately 75% or more of the surface area; approximately 80% or more of the surface area; approximately 85% or more of the surface area; approximately 90% or more of the surface area; approximately 95% or more of the surface area; or approximately 100% of the surface area of the outer surface, outwardly facing surface and/or the outermost surface of the support substrate is or visually appears black or near black in colour, or is or appears visually as another colour other than black or near black and has a LRV of approximately 65% or less and/or a LAV of approximately 35% or more.

4. The adhesive tape support substrate according to any preceding claim, wherein the outer surface, the outwardly facing surface and/or the outermost surface of the support substrate has a LRV of approximately 60% or less, approximately 55% or less; approximately 50% or less; approximately 45% or less; approximately 40% or less; approximately 35% or less; approximately 30% or less; approximately 25% or less; approximately 20% or less; approximately 15% or less; approximately 10% or less; or approximately 5% or less; or
wherein the outer surface, the outwardly facing surface and/or the outermost surface of the support substrate has a LAV of approximately 40% or more; approximately 45% or more; approximately 50% or more; approximately 55% or more, approximately 60% or more; approximately 65% or more; approximately 70% or more; approximately 75% or more; approximately 80% or more; approximately 90% or more; or approximately 95% or more.

5. The adhesive tape support substrate according to any preceding claim, wherein the outer surface, the outwardly facing surface and/or the outermost surface of the support substrate is a matte surface or a gloss surface.

6. The adhesive tape support substrate according to claim 1, wherein approximately 30% or more of the surface area of the outer surface, the outwardly facing surface and/or the outermost surface of the support substrate, has a LRV of approximately 65% or less at every, or substantially every, specific wavelength within the visible part of the electromagnetic spectrum (400nm-700nm), and a LAV of approximately 35% or more at every, or substantially every, specific wavelength within the visible part of the electromagnetic spectrum (400nm-700nm); or
wherein 30% or more surface area of the outer surface, the outwardly facing surface and/or the outermost surface of the support substrate, has an average LRV of approximately 25% or less across the entire, or substantially the entire visible part of the electromagnetic spectrum (400nm-700nm), and an average LAV of approximately 75% or more across the entire, or substantially the entire visible part of the electromagnetic spectrum (400nm-700nm).

7. The adhesive tape support substrate according to claim 6, wherein the average LRV is 20% or less, 15% or less, 10% or less, or 5% or less, across the entire, or substantially the entire visible part of the electromagnetic spectrum (400nm-700nm); or
wherein the average LAV is 80% or more, 85% or more, 90% or more or 95% or more, across the entire, or substantially the entire visible part of the electromagnetic spectrum (400nm-700nm).

8. The adhesive tape support substrate according to any preceding claim, wherein the adhesive tape support substrate includes an intermediate layer or surface that is or appears black or near black in colour, or is or appears visually as another colour other than black or near black and has a LRV of approximately 65% or less and/or a LAV of approximately 35% or more.

9. The adhesive tape support substrate according to any preceding claim, wherein adhesive tape is wound onto or around the adhesive tape support substrate; or
wherein the adhesive tape is wound onto or around the adhesive tape support substrate multiple times to provide a multi-layered adhesive tape product.

10. The adhesive tape support substrate according to any preceding claim, wherein the support substrate is cylindrical or substantially cylindrical in shape.

11. The adhesive tape support substrate according to claim 10, wherein the adhesive tape is transparent or substantially transparent.

12. A method of manufacturing an adhesive tape support substrate for supporting adhesive tape in use, **characterised in that** the method includes the steps of providing an outer surface, an outwardly facing surface and/or an outermost surface of the support substrate that is or visually appears black or near black in colour, or is or appears visually as another colour other than black or near black and a light reflection value (LRV) of approximately 65% or less and/or a light absorption value (LAV) of approximately 35% or more.

13. The method according to claim 12, wherein the method includes the step of winding adhesive tape around the outer surface, an outwardly facing surface and/or an outermost surface of the support substrate.

14. An adhesive tape, said adhesive tape wound around an adhesive tape support substrate according to any of claims 1-11.

15. A method of manufacturing adhesive tape, said method including the steps of winding adhesive tape around an adhesive tape support substrate according to any of claims 1-11.
